Europäisches Patentamt

European Patent Office

Office européen des brevets

(11) Publication number: **0 423 909 A2**

# EUROPEAN PATENT APPLICATION

(21) Application number: 90250210.3

(22) Date of filing: 16.08.90

(51) Int. Cl.⁵: **F02D 23/02**, F02B 37/12, F02D 33/02

(30) Priority: 20.10.89 JP 122163/89 U

(43) Date of publication of application:
24.04.91 Bulletin 91/17

(84) Designated Contracting States:
CH DE DK LI

(71) Applicant: MITSUBISHI JUKOGYO KABUSHIKI KAISHA
5-1, Marunouchi 2-chome Chiyoda-ku
Tokyo(JP)

(72) Inventor: Arai, Takeshi, c/o Yokohama
Dockyard & Machinery
Works, Mitsubishi Jukogyo K.K. 12,
Nishiki-cho
Naka-ku, Yokohama, Kanagawa Pref.(JP)

(74) Representative: Meissner, Peter E., Dipl.-Ing.
et al
Patentanwaltsbüro Meissner & Meissner,
Herbertstrasse 22
W-1000 Berlin 33(DE)

(54) Supercharger control device.

(57) According to the present invention, there is provided a supercharger control device of an internal combustion engine equipped with a supercharger having a variable nozzle and a variable diffuser, comprising: an excess air ratio setting unit which sets an excess air ratio when an internal combustion engine is in operation, an excess air ratio detector which detects an excess air ratio of an internal combustion engine, an area setting unit which sets the nozzle area control quantity of said variable nozzle and the diffuser area control quantity of the variable diffuser by comparing the result of detection by this excess air ratio detector with the set value of said excess air ratio setting unit and an area controller which controls the nozzle area of the variable nozzle and the diffuser area of the variable diffuser with the set value of this area setting unit, wherein the excess air ratio can be maintained under an optimum state without lowering the efficiency of the supercharger, viz., the engine as a whole.

EP 0 423 909 A2

# SUPERCHARGER CONTROL DEVICE

## 2. FIELD OF THE INVENTION AND RELATED ART STATEMENT

The present invention relates to a supercharger control device of a premixed type internal combustion engine.

In a premixed type internal combustion engine, an air supply quantity to fuel, viz., an air supercharging ratio has to be confined within certain limits. As a means for accomplishing abovesaid purpose, there are such methods that charged air is discharged in the atmospheric air, an exhaust gas is bypassed without getting through a turbine, or a throttle is provided in an air charging line so as to control supercharging pressure, viz., an air supply quantity.

In a conventional system, however, characteristics of the supercharger itself do not change, but flow rate characteristics of an engine are different. Thus, deterioration of the supercharger efficiency, and in its turn, deterioration of engine performance has been incurred. For example, when an exhaust gas is bypassed without getting through a turbine, flow quantity characteristics of the engine show an opened state, thus incurring deterioration of the blower, viz., compressor efficiency of the supercharger. Also, when the charged air is discharged in the atmospheric air, deterioration of the supercharger efficiency is incurred similarly to the above, and thermodynamic cyclic loss is incurred because the difference between the air charging pressure and the exhaust pressure is reduced. Furthermore, the charging is throttled, bad effects such as deterioration of surging resistant performance of the supercharger have been produced.

## 3. OBJECT AND SUMMARY OF THE INVENTION

It is an object of the present invention to provide a supercharger control device which is able to confine an air supercharging rate within a certain range without incurring deterioration of engine performance by varying characteristics of the supercharger.

In order to achieve abovementioned object, the present invention exists in that, in a supercharger control device of an internal combustion engine equipped with a supercharger having a variable nozzle, there are provided an excess air ratio setting unit which sets an excess air ratio when the internal combustion engine is in operation, an excess air ratio detector which detects an excess air ratio of an internal combustion engine, an area setting unit which sets a nozzle area control quantity of said variable nozzle by comparing the results of detection of this excess air ratio detector with the set value of said excess air ratio setting unit, and an area controller which controls the nozzle area of said variable nozzle with the set value of this area setting unit.

The present invention also exists in that, in a supercharger control device of an internal combustion engine equipped with a supercharger in which a turbine having a variable nozzle is provided in a discharge path of the internal combustion engine and a compressor is provided in a charging path of said internal combustion engine, there are provided an exhaust oxygen concentration setting unit which sets a target value of an exhaust oxygen concentration from those data that have been input in advance into a memory by inputting operating conditions, an exhaust oxygen concentration detector which detects oxygen concentration in the exhaust gas, an area setting unit which sets the nozzle area control quantity of said variable nozzle by comparing the detected value of this exhaust oxygen concentration detector with the target value of said oxygen concentration setting unit, and an area controller which controls the nozzle area of the variable nozzle based on the set value of this area setting unit.

The present invention further exists in that, in a supercharger control device of an internal combustion engine equipped with a supercharger having a variable diffuser, there are provided an excess air ratio setting unit which sets an excess air ratio when the internal combustion engine is in operation, an excess air ratio detector which detects the excess air ratio of the internal combustion engine, an area setting unit which sets a diffuser area control quantity of said variable diffuser by comparing the result of detection by this excess air ratio detector with the set value of said excess air ratio setting unit, and an area controller which controls the diffuser area of said variable diffuser with the set value of this area setting unit.

The present invention still further exists in that, in a supercharger control device of an internal combustion engine equipped with a supercharger provided with a turbine in a discharge path of an internal combustion engine and a compressor having a variable diffuser in the charging path of said internal combustion engine, there are provided an exhaust oxygen concentration setting unit which sets a target value of an exhaust oxygen concentration from those data that are input into a memory by inputting operating conditions, an exhaust oxygen concentration detector which detects the oxygen concentration in a discharge gas, an area setting unit which sets the diffuser area control quantity of said variable diffuser by comparing the detected value of this exhaust oxygen concentration detector with the target value of said oxygen concentration setting unit, and an area controller which controls the diffuser area of the variable diffuser based on the set value of this area setting unit.

The present invention also exists in that, in a supercharger control device of an internal combustion engine equipped with a supercharger having a variable nozzle and a variable diffuser, there are provided an excess air ratio setting unit which sets a excess air ratio when an internal combustion engine is in operation, an excess air ratio detector which detects an excess air ratio of an internal combustion engine, an area setting unit which sets the nozzle area control quantity of said variable nozzle and the diffuser area control quantity of the variable diffuser by comparing the result of detection by this excess air ratio detector with the set value of said excess air ratio setting unit, and an area controller which controls the nozzle area of the variable nozzle and the diffuser area of the variable diffuser with the set value of this area setting unit.

The present invention further exists in that, in a supercharger control device in an internal combustion engine equipped with a supercharger provided with a turbine having a variable nozzle in an exhaust path of the internal combustion engine and a compressor having a variable diffuser in the charging path of said internal combustion engine, there are provided an exhaust oxygen concentration setting unit which sets a target value of the exhaust oxygen concentration from those data that have been input in advance in a memory by inputting operating conditions, an exhaust oxygen concentration detector which detects the oxygen concentration in an exhaust gas, an area setting unit which sets the nozzle area control quantity of said variable nozzle and the diffuser area control quantity of the variable diffuser by comparing the detected value by this exhaust oxygen concentration detector with the target value of this exhaust oxygen concentration detector, and an area controller which controls the nozzle area of the variable nozzle and the diffuser area of the variable diffuser based on the set value of this area setting unit.

According to above-described inventions, an excess air ratio set value which has been set in advance and a detected value of the excess air ratio in actual operation are compared with each other while an internal combustion engine is in operation. As the result, when said detected value exceeds said set value, the area controller is operated so that the turbine nozzle area and/or the diffuser area is expanded so as to reduce the air quantity supplied to the internal combustion engine. Thus, it is possible to reduce the air quantity supplied to the internal combustion engine while securing the efficiency of the whole engine intact.

As described above, according to the supercharger control device of the present invention, a set excess air ratio and a detected value are compared with each other so that a nozzle area and a diffuser area of a supercharger having variable diffuser mechanisms may be controlled in accordance with the deviation quantity obtained by abovesaid comparison, thus making it possible to maintain the excess air ratio under an optimum state without lowering the efficiency of the supercharger, in its turn, the whole engine.

4.BRIEF DESCRIPTION OF THE DRAWINGS

Fig. 1 is a control block diagram showing a first embodiment of a supercharger control device of the present invention; and

Fig. 2 is a relative diagram of compressor performance and engine flow rate characteristic of a supercharger.

5. DETAILED DESCRIPTION OF PREFERRED EMBODIMENTS

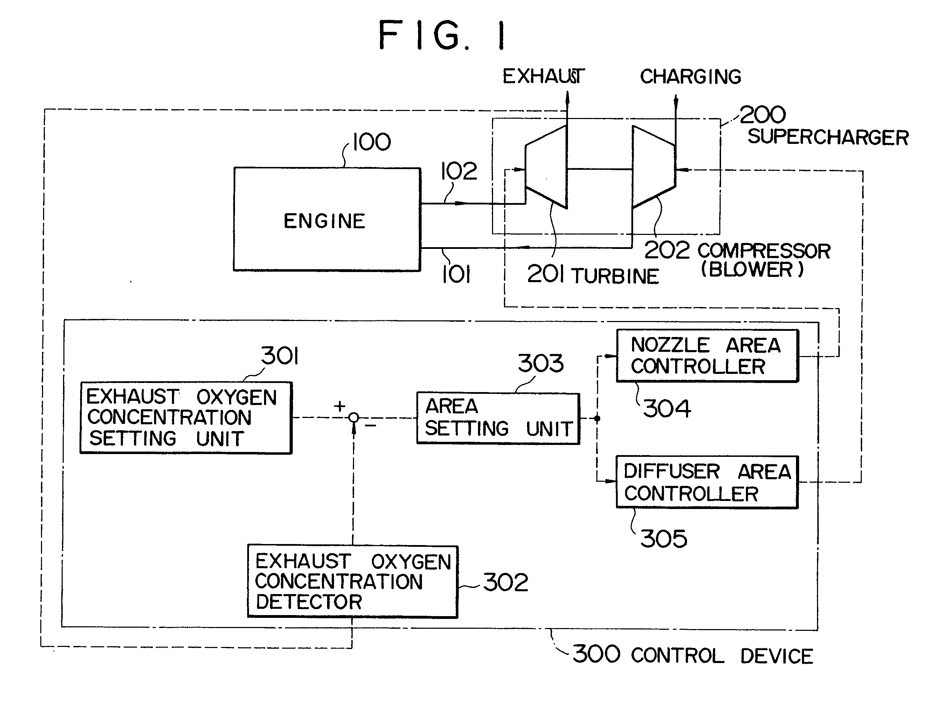

An embodiment of the present invention will be described hereafter with reference to Fig. 1.

A reference numeral 100 indicates an engine, and 200 indicates a supercharger provided on the engine 100. The supercharger 200 is provided with a turbine 201 which is rotated by an exhaust gas of the engine 100 in an exhaust path 102 of the engine 100 and a compressor (blower) 202 which is rotated by the rotation of this turbine 201 in a charging path 101 of the engine 100. This turbine 201 is provided with a variable nozzle (not shown), and the compressor 202 is provided with a variable diffuser (not shown).

300 indicates a supercharger control device which controls the excess air ratio of the supercharger 200 for the engine 100. This supercharger control device 300 is composed of an exhaust oxygen concentration setting unit 301 as an excess air ratio setting unit, an exhaust oxygen concentration detector 302 as an excess air ratio detector, an area setting unit 303, a nozzle area controller 304 and a diffuser area controller 305.

The exhaust oxygen concentration setting unit 301 includes those data that have been input in advance into a memory contained therein, and sets a target value of the exhaust oxygen concentration, that is, the excess air ratio when the engine is in operation, by inputting operating conditions. The exhaust oxygen concentration detector 302 detects the oxygen concentration in the exhaust gas discharged through an exhaust tube, that is, the excess air ratio of the engine.

The target value of the exhaust oxygen concentration which is set in the exhaust oxygen concentration setting unit 301 and the detected value of the oxygen concentration in the exhaust gas which is detected by the exhaust oxygen concentration detector 302 are compared with each other, and the deviation quantity therebetween is input to the area setting unit 303. The area setting unit 303 determines the control quantity of the turbine nozzle area and/or the diffuser area based on the input deviation quantity, and outputs signals to a nozzle area controller 304 and a diffuser area controller 305. The nozzle area controller 304 controls the turbine nozzle area of the turbine 201 based on the output signal of the area setting unit 303. The diffuser area controller 305 controls the diffuser area of the compressor 202 based on the output signal of the area setting unit 303.

In the next place, the operation of the supercharger control device having above-described construction will be described.

Operating conditions are input to the exhaust oxygen concentration setting unit 301 in which data are input in advance into a memory, and the target value of the exhaust oxygen concentration is set. Then, the oxygen concentration in the exhaust gas while the engine is in operation is detected by the detector 302. The deviation quantity between the target value and the detected value is input to the area setting unit 303, and the control quantitites of the turbine nozzle area and/or the diffuser area are determined with said area setting unit 303. Then, the controllers 304 and 305 control the areas of the variable nozzle and/or the variable diffuser based on these control quantitites. The oxygen concentration in the exhaust gas which has been changed as the result of abovesaid control is detected by the exhaust oxygen concentration detector 302, and this detected value is fed back so as to keep the excess air ratio during operation of the engine under an optimum state.

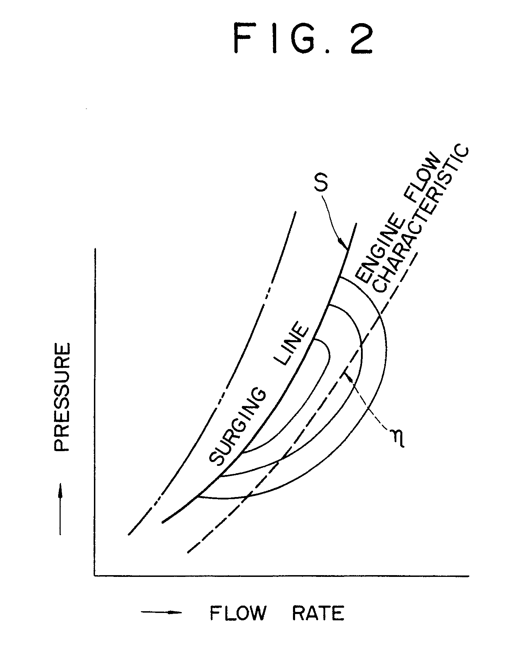

Next, the relationship between the compressor performance in a supercharger and the engine flow characteristic is shown in Fig. 2.

The compressor efficiency $\eta$ becomes larger as it approaches to a surging line S. Therefore, it is better to allow the engine flow characteristic to come nearer to the surging line S in point of an effective use of the supercharger itself. However, it is required to leave a margin so that no surging is caused even if the engine characteristic is changed by sewage water and the like in the passage and approaches to the surging line S.

For example, when the turbine nozzle area only is constricted, the engine flow characteristic is changed by abovesaid constriction and approaches to the surging line S, thus the pressure and the efficiency are elevated. Under such a state, however, the engine flow characteristic is too close to the surging line S, which leaves too small surging margin, thus causing surging to occur. Accordingly, it is required to leave a margin at least not to generate surging when constricted in case only the turbine nozzle area is constricted. In other words, the engine flow characteristic curve is relatively open with an ordinary tubing nozzle area, and the engine is compelled to be used in its entirety at a portion of poor efficiency.

When the diffuser of the compressor 202 is constricted, the compressor performance curve is changed and the surging line S moves toward the direction shown with a two-dot chain line in Fig. 2, and the curve of the compressor efficiency $\eta$ also follows said movement. Therefore, in case both the turbine 201 and the compressor 202 are constricted, it is possible to leave the margin of the engine flow characteristic with respect to the surging line S similarly to the case of an ordinary area. In other words, it is not needed to sacrifice the characteristic at the time of an ordinary area.

Furthermore, when the engine flow characteristic is changed by contamination and the like in the passage and approaches to the surging line S, it can be returned to the original position by constriction adjustment of the turbine 201 and the compressor 202. Therefore, it is possible to keep the original design point nearby to the surging line S. In other words, it is possible to use the engine at a portion of high efficiency in its entirety.

## Claims

(1) A supercharger control device of an internal combustion engine equipped with a supercharger having a variable nozzle, comprising:
an excess air ratio setting unit which sets an excess air ratio when the internal combustion engine is in operation;
an excess air ratio detector which detects an excess air ratio of an internal combustion engine;
an area setting unit which sets a nozzle area control quantity of said variable nozzle by comparing the results of detection of this excess air ratio detector with the set value of said excess air ratio setting unit; and
an area controller which controls the nozzle area of said variable nozzle with the set value of this area setting unit.

(2) A supercharger control device of an internal combustion engine equipped with a supercharger in which a turbine having a variable nozzle is provided in a discharge path of the internal combustion engine and a compressor is provided in a charging path of said internal combustion engine, comprising:

an exhaust oxygen concentration setting unit which sets a target value of an exhaust oxygen concentration from those data that have been input in advance into a memory by inputting operating conditions;

an exhaust oxygen concentration detector which detects oxygen concentration in the exhaust gas;

an area setting unit which sets the nozzle area control quantity of said variable nozzle by comparing the detected value of this exhaust oxygen concentration detector with the target value of said oxygen concentration setting unit; and

an area controller which controls the nozzle area of the variable nozzle based on the set value of this area setting unit.

(3) A supercharger control device of an internal combustion engine equipped with a supercharger having a variable diffuser, comprising:

an excess air ratio setting unit which sets an excess air ratio when the internal combustion engine is in operation;

an excess air ratio detector which detects the excess air ratio of the internal combustion engine;

an area setting unit which sets a diffuser area control quantity of said variable diffuser by comparing the result of detection by this excess air ratio detector with the set value of said excess air ratio setting unit; and

an area controller which controls the diffuser area of said variable diffuser with the set value of this area setting unit.

(4) A supercharger control device of an internal combustion engine equipped with a supercharger provided with a turbine in a discharge path of an internal combustion engine and a compressor having a variable diffuser in the charging path of said internal combustion engine, comprising:

an exhaust oxygen concentration setting unit which sets a target value of an exhaust oxygen concentration from those data that are input into a memory by inputting operating conditions;

an exhaust oxygen concentration detector which detects the oxygen concentration in a discharge gas;

an area setting unit which sets the diffuser area control quantity of said variable diffuser by comparing the detected value of this exhaust oxygen concentration detector with the target value of said oxygen concentration setting unit; and

an area controller which controls the diffuser area of the variable diffuser based on the set value of this area setting unit.

(5) A supercharger control device of an internal combustion engine equipped with a supercharger having a variable nozzle and a variable diffuser, comprising:

an excess air ratio setting unit which sets an excess air ratio when an internal combustion engine is in operation;

an excess air ratio detector which detects an excess air ratio of an internal combustion engine;

an area setting unit which sets the nozzle area control quantity of said variable nozzle and the diffuser area control quantity of the variable diffuser by comparing the result of detection by this excess air ratio detector with the set value of said excess air ratio setting unit; and

an area controller which controls the nozzle area of the variable nozzle and the diffuser area of the variable diffuser with the set value of this area setting unit.

(6) A supercharger control device in an internal combustion engine equipped with a supercharger provided with a turbine having a variable nozzle in an exhaust path of the internal combustion engine and a compressor having a variable diffuser in the charging path of said internal combustion engine, comprising:

an exhaust oxygen concentration setting unit which sets a target value of the exhaust oxygen concentration from those data that have been input in advance in a memory by inputting operating conditions;

an exhaust oxygen concentration detector which detects the oxygen concentration in an exhaust gas;

an area setting unit which sets the nozzle area control quantity of said variable nozzle and the diffuser area control quantity of the variable diffuser by comparing the detected value by this exhaust oxygen concentration detector with the target value of this exhaust oxygen concentration detector; and

an area controller which controls the nozzle area of the variable nozzle and the diffuser area of the variable diffuser based on the set value of this area setting unit.

# FIG. 1

EXHAUST    CHARGING

200 SUPERCHARGER

100

ENGINE

102

101

201 TURBINE

202 COMPRESSOR (BLOWER)

301 EXHAUST OXYGEN CONCENTRATION SETTING UNIT

303 AREA SETTING UNIT

NOZZLE AREA CONTROLLER

304

DIFFUSER AREA CONTROLLER

305

302 EXHAUST OXYGEN CONCENTRATION DETECTOR

300 CONTROL DEVICE

EP 0 423 909 A2

# FIG. 2